# EUROPÄISCHE PATENTSCHRIFT

(11) **EP 2 394 343 B1**
(45) Veröffentlichungstag und Bekanntmachung des Hinweises auf die Patenterteilung: **07.09.2016**
(21) Anmeldenummer: 10706139.2
(22) Anmeldetag: 03.02.2010
(51) Int. Cl.: H02M 3/158, H02J 1/06

(54) **ANORDNUNG ZUR BEREITSTELLUNG EINER STEUER- UND/ODER VERSORGUNGSSPANNUNG FÜR EINEN VERBRAUCHER UND VERFAHREN ZUM BETREIBEN EINER SOLCHEN ANORDNUNG**
ARRANGEMENT FOR PROVIDING A CONTROL AND/OR SUPPLY VOLTAGE FOR A CONSUMER, AND METHOD FOR OPERATING SUCH AN ARRANGEMENT
ENSEMBLE DESTINÉ À FOURNIR UNE TENSION D'ALIMENTATION ET/OU DE COMMANDE À UN CONSOMMATEUR ET PROCÉDÉ DE FONCTIONNEMENT D'UN TEL ENSEMBLE

(30) Priorität: 06.02.2009 DE 102009007955
(43) Veröffentlichungstag der Anmeldung: 14.12.2011
(73) Patentinhaber: SEW-EURODRIVE GmbH & Co. KG, 76646 Bruchsal (DE)
(72) Erfinder: GNIRSS, Bernhard, 76275 Ettlingen (DE)
(74) Vertreter: Tüngler, Eberhard
(86) Internationale Anmeldenummer: PCT/EP2010/000659
(87) Internationale Veröffentlichungsnummer: WO 2010/089099

(56) Entgegenhaltungen:
- DE-C1- 19 934 559
- US-A- 5 187 465
- US-A- 5 501 486
- US-A- 5 872 460
- US-A1- 2006 217 863

## Beschreibung

Die Erfindung betrifft eine Anordnung zur Bereitstellung einer Steuer- und/oder Versorgungsspannung für einen Verbraucher und ein Verfahren zum Betreiben einer solchen Anordnung.

Es ist bekannt, elektronische Geräte, wie beispielsweise Steuerungen, mit sogenannten Eingängen und Ausgängen auszustatten. An einem Ausgang lässt sich hierbei ein weiteres Elektrogerät anschließen, das somit auch steuerbar ist oder hierdurch ein Steuersignal empfängt.

**Aus der** US 5 872 460 A **ist eine schnell wirkender Testschaltung mit Stromerfassung für eine SIR Diagnostik bekannt.**

**Aus der** DE 199 34 559 C1 **ist eine Schaltendstufe für einen Zünder einer Insassenschutzeinrichtung bekannt.**

Der Erfindung liegt daher die Aufgabe zugrunde, die Sicherheit bei Anlagen weiterzubilden.

**Erfindungsgemäß wird die Aufgabe bei der Anordnung nach den in Anspruch 1 und bei dem Verfahren nach den in Anspruch 3 angegebenen Merkmalen gelöst.**

Wichtige Merkmale der Erfindung bei der Anordnung sind, dass sie zur Bereitstellung einer Steuer- und/oder Versorgungsspannung für einen Verbraucher vorgesehen ist,
wobei der Verbraucher an Anschlüsse P und M anschließbar ist und somit dem Verbraucher von der Anordnung eine Steuerspannung und/oder Versorgungsspannung bereitstellbar ist,
wobei die Anordnung einen ersten steuerbaren Ausgangsschalter umfasst, der zwischen einem oberen Potential einer Versorgungsspannung, insbesondere 24 Volt Spannung, und dem Anschluss P angeordnet ist,
wobei ein erstes Mittel zur Stromerfassung zwischen dem ersten steuerbaren Ausgangsschalter und dem Anschluss P angeordnet ist,
wobei die Anordnung einen zweiten steuerbaren Ausgangsschalter umfasst, der zwischen einem unteren Potential der Versorgungsspannung, insbesondere Masse, und dem Anschluss M angeordnet ist,
wobei ein zweites Mittel zur Stromerfassung zwischen dem zweiten steuerbaren Ausgangsschalter und dem Anschluss P angeordnet ist.

Von Vorteil ist dabei, dass die Sicherheit erhöht ist, weil auf diese Weise eine Erkennung von Fremdschluss und Fehlspannungen ermöglicht ist. Dabei ist die Erkennung insbesondere dann ausführbar, wenn einer der Ausgangsschalter geöffnet ist, also ein AUS-Signal anliegen soll. Somit ist ein sicherer Ausgang bei Elektrogeräten, wie Steuerung, Umrichter oder dergleichen ausgeführt.

Bei einer vorteilhaften Ausgestaltung ist zwischen dem ersten Mittel zur Stromerfassung und dem Anschluss P eine Diode angeordnet, wobei an beiden Anschlüssen der ersten Diode jeweils ein Mittel zur Spannungserfassung angeordnet ist. Ebenso ist zwischen dem zweiten Ausgangsschalter und dem Anschluss M eine zweite Diode angeordnet, wobei an beiden Anschlüssen der zweiten Diode jeweils ein Mittel zur Spannungserfassung angeordnet ist. Von Vorteil ist dabei, dass eine Abtrennung der äußeren Komponenten von den im Gerät innen liegenden Komponenten geschaffen ist. Auf diese Weise ist also eine unabhängige Messung von Größen ausführbar, so dass durch eine Abweichung vom Soll eine Auslösung einer Fehlermeldung bewirkbar ist.

**Erfindungsgemäß** weist die Anordnung eine Steuerelektronik auf, der die erfassten Werte, insbesondere an Strom und/oder Spannung, zugeführt werden und die die Ansteuersignale für die Ausgangsschalter erzeugt. Von Vorteil ist dabei, dass eine Erzeugung von Steuersignalen für das am Ausgang, also zwischen den Anschlüssen P und M, anzuschließende Gerät, von derselben Steuerelektronik ausführbar ist wie auch die Fehlererkennung, umfassend die zugehörige Logik und Vergleichsmittel.

Insbesondere umfasst die Steuerelektronik eine Logik zur Fehlererkennung, insbesondere wobei die Zustände der Ansteuersignale für die Ausgangsschalter und die erfassten Strom- und/oder Spannungswerte berücksichtigt werden. Von Vorteil ist dabei, dass wegen der Erzeugung der Steuersignale innerhalb der Steuerelektronik ein zustandsabhängiger Vergleich der erfassten Messwerte besonders einfach ist und nur ein geringer Aufwand notwendig ist.

Bei einer vorteilhaften Ausgestaltung umfasst ein Mittel zur Spannungserfassung eine Reihenschaltung von ohmschen Widerständen und/oder ein Mittel zur Stromerfassung einen Shuntwiderstand. Von Vorteil ist dabei, dass besonders einfache Arten der Strom- und/oder Spannungserfassung vorsehbar sind.

Wichtige Merkmale bei dem Verfahren zum Betreiben einer Anordnung zur Bereitstellung einer Steuer- und/oder Versorgungsspannung für einen Verbraucher sind, dass der Verbraucher an Anschlüsse P und M der Anordnung angeschlossen wird und somit dem Verbraucher von der Anordnung eine Steuerspannung und/oder Versorgungsspannung bereitgestellt wird,
wobei die Anordnung einen ersten steuerbaren Ausgangsschalter umfasst, der zwischen einem oberen Potential einer Versorgungsspannung, insbesondere 24 Volt Spannung, und dem Anschluss P angeordnet ist,
wobei der Strom zwischen dem ersten steuerbaren Ausgangsschalter und dem Anschluss P erfasst wird als erster Strommesswert,
wobei die Anordnung einen zweiten steuerbaren Ausgangsschalter umfasst, der zwischen einem unteren Potential der Versorgungsspannung, insbesondere Masse, und dem Anschluss M angeordnet ist,
wobei der Strom zwischen dem zweiten steuerbaren Ausgangsschalter und dem Anschluss P erfasst wird als zweiter Strommesswert.

Von Vorteil ist dabei, dass ein Vergleich der erfassten Stromwerte, insbesondere mit einem Sollwert, sogar dann ausgeführt wird, wenn einer der Ausgangsschalter geöffnet ist. Somit ist also auch im ausgeschalteten Zustand des angesteuerten Geräts eine Fehlererkennung ermöglicht.

Bei einer vorteilhaften Ausgestaltung ist zwischen dem ersten Mittel zur Stromerfassung und dem Anschluss P eine Diode angeordnet, wobei an beiden Anschlüssen der ersten Diode jeweils die Spannung erfasst wird, also nach innengerichtet und ausgangsseitig,
und/oder zwischen dem zweiten Ausgangsschalter und dem Anschluss M ist eine zweite Diode angeordnet, wobei an beiden Anschlüssen der zweiten Diode jeweils die Spannung erfasst wird, also nach innengerichtet und ausgangsseitig. Von Vorteil ist dabei, dass eine Trennung der Ausgangsseite und der innen liegenden Komponenten ausgeführt ist. Auf diese Weise ist abhängig von den innen angesteuerten Schalterzuständen unter Berücksichtigung des Impedanzverhaltens des Verbrauchers ein Erkennen einer Fremdspannung in oder an der Verkabelung des Verbrauchers ausführbar. Das Impedanzverhalten ist beispielsweise dadurch berücksichtigbar, dass die Messergebnisse wiederholend ausgewertet werden und bei Unterschreiten eines kritischen Wertes die Fehlerfreiheit gemeldet wird, solange nicht ein Maximalwert an Zeit überschritten ist. Die Bestimmung der inneren Spannung ist in Abhängigkeit von dem Schaltzustand ausführbar und somit eine Überwachung der Funktionsweise des Schalters erreichbar.

Bei einer vorteilhaften Ausgestaltung wird bei geöffnetem ersten Ausgangsschalter und geschlossenem zweiten Ausgangsschalter am zweiten Strommesswert ein Fremdschluss erkennbar gemacht, insbesondere indem der Messwert mit kritischen Werten verglichen wird. Ebenso wird bei geöffnetem zweiten Ausgangsschalter und geschlossenem ersten Ausgangsschalter am ersten Strommesswert ein Fremdschluss erkennbar gemacht, insbesondere indem der Messwert mit kritischen Werten verglichen wird. Von Vorteil ist dabei, dass auch bei ausgeschaltetem Zustand des Ausgangs eine Fehlererkennung ausführbar ist.

Bei einer vorteilhaften Ausgestaltung werden der an der ersten Diode ausgangsseitige und der nach innengerichtete Spannungsmesswert erfasst und miteinander verglichen, insbesondere um eine Fehlspannung erkennbar zu machen

und/oder es werden an der zweiten Diode ausgangsseitige und der nach innengerichtete Spannungsmesswerte erfasst und miteinander verglichen, insbesondere um eine Fehlspannung erkennbar zu machen. Von Vorteil ist dabei, dass eine Fehlspannungserkennung bei ohmschem Verbraucher in einfacher und kostengünstiger Weise ermöglicht ist.

Bei einer vorteilhaften Ausgestaltung wird abhängig vom Zustand des ersten Ausgangsschalters der an der ersten Diode erfasste, nach innengerichtete Spannungswert mit einem zum Zustand gehörigen Sollwert verglichen
und/oder es wird
abhängig vom Zustand des zweiten Ausgangsschalters der an der zweiten Diode erfasste, nach innengerichtete Spannungswert mit einem zum Zustand gehörigen Sollwert verglichen. Von Vorteil ist dabei, dass die Funktion des ersten beziehungsweise zweiten Ausgangsschalters überwachbar ist.

Bei einer vorteilhaften Ausgestaltung wird nach Änderung des Schaltzustandes eines Ausgangsschalters der entsprechende Strommesswert und/oder Spannungsmesswert zeitverzögert erfasst zum Vergleich mit dem vom Zustand abhängigen Sollwert oder Sollwertebereich, insbesondere für diesen Strom und/oder diese Spannung. Von Vorteil ist dabei, dass auch bei nicht rein ohmschen Lasten das zugehörige Impedanzverhalten des an den Anschlüssen P und M angeschlossenen Geräts berücksichtigbar ist. Beispielsweise wird die Zeitverzögerung derart gewählt, dass die Erfassung der werte erst im stationären Zustand, also beispielsweise nach abgeschlossenem Aufladevorgang eines Kondensators ausgeführt wird.

Insbesondere wird also die Zeitverzögerung abhängig von der Impedanz des an den Anschlüssen P und M angeschlossenen Verbrauchers, insbesondere von einer Kapazität und/oder Induktivität des Verbrauchers, gewählt.

Bei einer vorteilhaften Ausgestaltung werden statt eines zeitverzögerten Messwertes die Messwerte wiederholend erfasst und es wird der Zeitverlauf der Messwerte bei der Fehlererkennung berücksichtigt wird. Von Vorteil ist dabei, dass je nach Verlauf der Strommesswerte oder Spannungsmesswerte auf die Impedanz des Verbrauchers rückgeschlossen werden kann. Auf diese Weise ist also auch die Impedanz, beispielsweise eine Parallelschaltung einer Kapazität oder Induktivität mit einem ohmschen Widerstand berücksichtigbar und insbesondere auch die Größe der Kapazität oder Induktivität. Vorzugsweise wird der stationäre Messwert zur Fehlererkennung verwendet.

Weitere Vorteile ergeben sich aus den Unteransprüchen.

Die Erfindung wird nun anhand von Abbildungen näher erläutert:
In der Figur 1 ist der P-Zweig der erfindungsgemäßen Anordnung zur Bereitstellung eines oberen Potentials P für einen Verbraucher am Anschluss P und in Figur 2 der M-Zweig zur Bereitstellung eines unteren Potentials M für einen Verbraucher am Anschluss M dargestellt.
In Figur 3 ist ein Verbraucher gezeigt, der an die Anschlüsse P und M der Figur 1 anschließbar ist, wobei der Verbraucher eingangsseitig eine Verpolschutzdiode und einen Kondensator aufweist. Dabei weist der Verbraucher einen zum Kondensator parallel angeordneten DC/DC-Wandler auf.
In Figur 4 ist ein Verbraucher gezeigt, der an die Anschlüsse P und M der Figur 1 anschließbar ist, wobei der Verbraucher eine induktive Last umfasst.
In Figur 5 ist ein Verbraucher gezeigt, der an die Anschlüsse P und M der Figur 1 anschließbar ist, wobei der Verbraucher eine kapazitive Last umfasst.

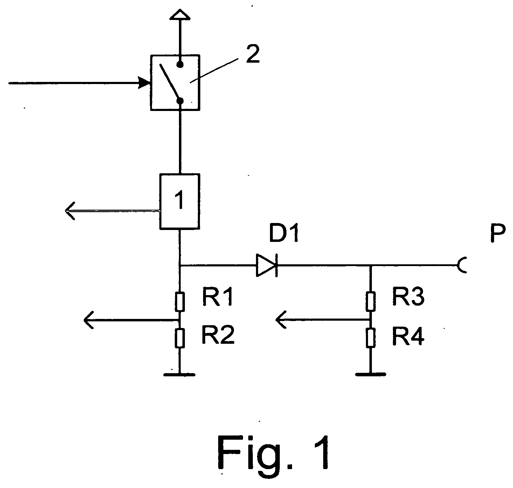

In Figur 1 wird der Ausgangsschalter 2 mit einer Signalspannung angesteuert, die in Figur 1 als Pfeil angedeutet ist. Der Ausgangsschalter 2 ist mit dem Mittel 1 zur Erfassung des Stroms und Mitteln zur Erfassung der Spannung in Reihe geschaltet und von einer Spannung versorgt, die zwischen dem unteren Potential der Versorgungsspannung und Masse besteht.. Die Mittel zur Spannungserfassung umfassen hierzu die beiden in Reihe geschalteten Widerstände R1 und R2. Diese Spannungserfassung ist also als innere Spannungserfassung ausgeführt, weil sie zur Erfassung der Spannung dient, die zur Versorgung des Verbrauchers dienen soll.

Aus der Reihenschaltung wird ein wesentlicher Stromanteil abgezweigt mittels einer Diode D1, so dass der innere Teil des P-Zweiges von ausgangsseitig auftretende Fremdspannungen abtrennbar ist. Ausgangsseitig ist ebenfalls eine Spannungserfassung angeordnet, umfassend die Widerstände R3 und R4.

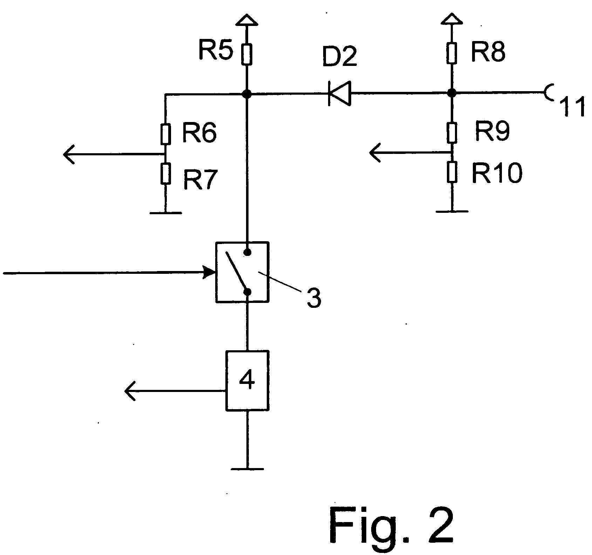

Der M-Zweig ist entsprechend aufgebaut, wie in Figur 2 dargestellt ist.

In Figur 2 wird der Ausgangsschalter 3 mit einer Signalspannung angesteuert, die in Figur 2 als Pfeil angedeutet ist. Der Ausgangsschalter 3 ist mit dem Mittel 4 zur Erfassung des Stroms und Mitteln zur Erfassung der Spannung in Reihe geschaltet und von einer Spannung versorgt, die zwischen dem unteren Potential der Versorgungsspannung und Masse besteht. Die Mittel zur Spannungserfassung umfassen hierzu den Widerstand R5, an dem ein Spannungsteiler aus R6 und R7 angeschlossen ist. Diese Spannungserfassung ist also als innere Spannungserfassung ausgeführt, weil sie zur Erfassung der Spannung dient, die zur Versorgung des Verbrauchers dienen soll.

Aus der Reihenschaltung wird ein wesentlicher Stromanteil abgezweigt mittels einer Diode D2, so dass der innere Teil des P-Zweiges von ausgangsseitig auftretende Fremdspannungen abtrennbar ist. Ausgangsseitig ist ebenfalls eine Spannungserfassung angeordnet, umfassend die Reihenschaltung aus Widerstand R8 und dem Spannungsteiler aus R9 und R10.

Bei geöffnetem Ausgangsschalter müsste also die innere und äußere erfasste Spannung im P-Zweig nach Figur 1 der Anordnung und im M-Zweig nach Figur 2 der Anordnung im Wesentlichen gleich sein.

Die erfindungsgemäße Anordnung umfasst eine Signalelektronik, welche nicht nur die Ausgangsschalter ansteuert sondern auch die erfassten Messwerte auswertet. Wenn bei Vergleich der erfassten Spannungen eine Abweichung feststellbar ist, muss ein Fehler, wie beispielsweise das Auftreten einer Fremdspannung an den Anschlüssen, aufgetreten sein

Der Zustand der geöffneten Schalter wird im Betrieb in zeitlichen Abständen nacheinander wiederholt angesteuert. Auf diese Weise ist eine wiederholte, insbesondere auch regelmäßig wiederholte Überprüfung auf einen solchen Fehler ausführbar.

Des Weiteren werden die erfassten Stromwerte des P-Zweiges und des M-Zweiges bei eingeschalteten Ausgangsschaltern 2 und 3 miteinander verglichen. Eine wesentliche Abweichung der erfassten Stromwerte voneinander lässt wiederum auf einen Fehlstrom schließen, also gegebenenfalls auch das Auftreten einer Fehlspannung erkennen.

Mit der Überwachung der inneren Spannungen lässt sich außerdem die Funktion der Ausgangsschalter überwachen.

Die Anordnung umfasst also den in Figur 1 dargestellten P-Zweig, der den Anschluss P umfasst, an welchem ein Verbraucher anschließbar ist zur Bereitstellung des oberen Potentials der Versorgungsspannung für den Verbraucher. Außerdem umfasst sie den in Figur 2 dargestellten M-Zweig, der den Anschluss M umfasst, an welchem der Verbraucher anschließbar ist zur Bereitstellung des unteren Potentials der Versorgungsspannung für den Verbraucher.

Insgesamt stellt also die Anordnung einen sicheren Ausgang zum Anschließen eines Verbrauchers bereit, der somit sicher ansteuerbar ist.

Die Anschlüsse sind also als Anschlusselemente an der Gehäuseoberfläche der Anordnung vorgesehen, wobei die zur Figur 1 und 2 genannten weiteren elektronischen Elemente vom Gehäuse umgeben sind.

Bei geöffnetem Ausgangsschalter 2 ist eine Fremdspannung mittels der Stromerfassung Im M-Zweig und dortigem geschlossenem Ausgangsschalter 3 detektierbar.

Umgekehrt ist bei geöffnetem Ausgangsschalter 3 des M-Zweiges eines Detektion einer Fremdspannung ausführbar mittels der erfassten Stromwerte im P-Zweig.

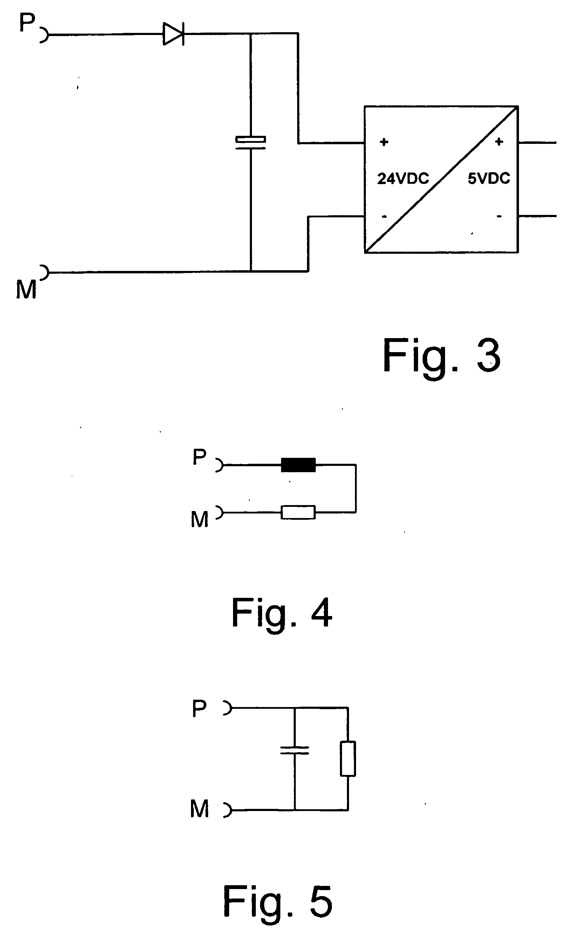

Aus den Figuren 3, 4 und 5 sind verschiedene anschließbare Verbraucher erkennbar. Da die dortigen Impedanzen nicht rein ohmsche Verbraucher sind, ist vorteiligerweise bei der Fehlererkennung ein Zeitverhalten berücksichtigt. Dies bedeutet, dass die Strommessung und/oder Spannungsmessung in den Zweigen um einen Zeitabstand versetzt wird zum Ereignis des Betätigens eines der oder beider Ausgangsschalter. Somit ist dann auch bei solchen Impedanzen mit Zeitverhalten eine Fehlererkennung bezüglich anliegender Fremdspannungen und/oder Fehlerströme ausführbar.

Die Anordnung ist beispielsweise in einem Elektrogerät, wie Umrichter, Wechselrichter, Steuerung, vorsehbar. Somit ist an den Anschlüssen ein auf Sicherheit überwachbarer, also sicherer Ausgang für das Anschließen anderer Geräte bereitstellbar. Vorzugsweise wird der Ausgang mit 24 Volt betrieben.

Vorteilig ist bei Figur 3 auch, das eine Fremdspannung nach der Verpolschutzdiode, also im Verbraucher, erkennbar ist mittels der Stromerfassung im M-Zweig.

### Bezugszeichenliste

P Anschluss mit oberem Potential
M Anschluss mit unterem Potential

1 Mittel zur Erfassung des Stroms im P-Zweig
2 Ausgangsschalter
3 Ausgangsschalter
4 Mittel zur Erfassung des Stroms im M-Zweig

R1, R2, R3, R4, R5, R6, R7, R8, R9, R10 Widerstand D1, D2 Diode

## Patentansprüche

1. Anordnung zur Bereitstellung einer Steuer- und/oder Versorgungsspannung für einen Verbraucher,
wobei der Verbraucher an Anschlüsse P und M anschließbar ist und somit dem Verbraucher von der Anordnung eine Steuerspannung und/oder Versorgungsspannung bereitstellbar ist,
**wobei** die Anordnung einen ersten steuerbaren Ausgangsschalter (2) umfasst, der zwischen einem oberen Potential einer Versorgungsspannung, insbesondere 24 Volt Spannung, und dem Anschluss P angeordnet ist,
wobei ein erstes Mittel zur Stromerfassung zwischen dem ersten steuerbaren Ausgangsschalter (2) und dem Anschluss P angeordnet ist,
wobei die Anordnung einen zweiten steuerbaren Ausgangsschalter (3) umfasst, der zwischen einem unteren Potential der Versorgungsspannung, Insbesondere Masse, und dem Anschluss M angeordnet ist,
wobei ein zweites Mittel zur Stromerfassung zwischen dem zweiten steuerbaren Ausgangsschalter (3) und dem Anschluss M angeordnet.ist oder zwischen Ausgangsschalter (3) und unterem Potential der Versorgungsspannung,
**wobei**
**das erste Mittel zur Stromerfassung in einem P-Zweig, insbesondere also in einem den Anschluss P versorgenden Zweig, angeordnet ist,**
**und wobei das zweite Mittel zur Stromerfassung in einem M-Zweig, also in einem unteren Zweig, insbesondere also dem den Anschluss M versorgenden Zweig, angeordnet ist,**
**wobei die Anordnung eine Steuerelektronik aufweist, der die erfassten Werte, insbesondere an Strom und/oder Spannung, zugeführt werden und die die Ansteuersignale für die Ausgangsschalter erzeugt,**
**wobei die Steuerelektronik eine Logik zur Fehlererkennung umfasst,**
**dadurch gekennzeichnet, dass**
**zwischen dem ersten Mittel zur Stromerfassung und dem Anschluss P eine Diode angeordnet ist, wobei an beiden Anschlüssen der ersten Diode jeweils ein Mittel zur Spannungserfassung angeordnet ist,**
**und/oder zwischen dem zweiten Ausgangsschalter und dem Anschluss M eine zweite Diode angeordnet ist, wobei an beiden Anschlüssen der zweiten Diode jeweils ein Mittel zur Spannungserfassung angeordnet ist,**
**wobei von der Logik zur Fehlererkennung die Zustände der Ansteuersignale für die Ausgangsschalter und die erfassten Spannungswerte oder Strom- und Spannungswerte berücksichtigt werden.**

2. Anordnung nach Anspruch 1,
**dadurch gekennzeichnet, dass**
ein Mittel zur Spannungserfassung eine Reihenschaltung von ohmschen Widerständen umfasst und/oder ein Mittel zur Stromerfassung einen Shuntwiderstand umfasst.

3. Verfahren zum Betreiben einer Anordnung zur Bereitstellung einer Steuer- und/oder Versorgungsspannung für einen Verbraucher,
wobei der Verbraucher an Anschlüsse P und M der Anordnung angeschlossen wird und somit dem Verbraucher von der Anordnung eine Steuerspannung und/oder Versorgungsspannung bereitgestellt wird,
wobei die Anordnung einen ersten steuerbaren Ausgangsschalter (2) umfasst, der zwischen einem oberen Potential einer Versorgungsspannung, insbesondere 24 Volt Spannung, und dem Anschluss P angeordnet ist,
wobei der Strom zwischen dem ersten steuerbaren Ausgangsschalter (2) und dem Anschluss P erfasst wird als erster Strommesswert,
wobei die Anordnung einen zweiten steuerbaren Ausgangsschalter (3) umfasst, der zwischen einem unteren Potential der Versorgungsspannung, insbesondere Masse, und dem Anschluss M angeordnet ist,
wobei der Strom zwischen dem zweiten steuerbaren Ausgangsschalter (3) und dem Anschluss P erfasst wird als zweiter Strommesswert,
**wobei die Anordnung eine Steuerelektronik aufweist, der die erfassten Werte, insbesondere an Strom und/oder Spannung, zugeführt werden und die die Ansteuersignale für die Ausgangsschalter erzeugt,**
**wobei die Steuerelektronik eine Logik zur Fehlererkennung umfasst,**
**dadurch gekennzeichnet, dass**
**zwischen dem ersten Mittel zur Stromerfassung und dem Anschluss P eine Diode angeordnet ist, wobei an beiden Anschlüssen der ersten Diode jeweils die Spannung erfasst wird, also nach innengerichtet und ausgangsseitig,**
**und/oder zwischen dem zweiten Ausgangsschalter und dem Anschluss M eine zweite Diode angeordnet ist, wobei an beiden Anschlüssen der zweiten Diode jeweils die Spannung erfasst wird, also nach innengerichtet und ausgangsseitig,**
**wobei von der Logik zur Fehlererkennung die Zustände der Ansteuersignale für die Ausgangsschalter und die erfassten Spannungswerte oder Strom- und Spannungswerte berücksichtigt werden.**

4. Verfahren nach Anspruch 3,
**dadurch gekennzeichnet, dass**
bei geöffnetem ersten Ausgangsschalter und geschlossenem zweiten Ausgangsschalter am zweiten Strommesswert ein Fremdschluss erkennbar gemacht wird, insbesondere indem der Messwert mit **dem Fremdschluss entsprechenden** kritischen Werten verglichen wird.

5. Verfahren nach Anspruch 3 oder 4,
**dadurch gekennzeichnet, dass**
bei geöffnetem zweiten Ausgangsschalter und geschlossenem ersten Ausgangsschalter am ersten Strom messwert ein Fremdschluss erkennbar gemacht wird, insbesondere indem der Messwert mit **dem Fremdschluss entsprechenden** kritischen Werten verglichen wird.

6. Verfahren nach einem der Ansprüche 3 bis 5,
**dadurch gekennzeichnet, dass**
der an der ersten Diode erfasst ausgangsseitige und der nach innengerichtete Spannungsmesswert miteinander verglichen wird, insbesondere um eine Fehlspannung erkennbar zu machen.

7. Verfahren nach einem der Ansprüche 3 bis 6,
der an der zweiten Diode erfasst ausgangsseitige und der nach innengerichtete Spannungsmesswert miteinander verglichen wird, insbesondere um eine Fehlspannung erkennbar zu machen.

8. Verfahren nach einem der Ansprüche 3 bis 7,
**dadurch gekennzeichnet, dass**
abhängig vom Zustand des ersten Ausgangsschalters der an der ersten Diode erfasste, nach innengerichtete Spannungswert mit einem zum Zustand gehörigen Sollwert verglichen wird, insbesondere um die Funktion des ersten Ausgangsschalters zu überwachen

9. Verfahren nach einem der Ansprüche 3 bis 8,
**dadurch gekennzeichnet, dass**
abhängig vom Zustand des zweiten Ausgangsschalters der an der zweiten Diode erfasste, nach innengerichtete Spannungswert mit einem zum Zustand gehörigen Sollwert verglichen wird, insbesondere um die Funktion des zweiten Ausgangsschalters zu überwachen.

10. Verfahren nach einem der Ansprüche 3 bis 9,
**dadurch gekennzeichnet, dass**
nach Änderung des Schaltzustandes eines Ausgangsschalters der entsprechende Strommesswert und/oder Spannungsmesswert zeitverzögert erfasst wird zum Vergleich mit dem vom Zustand abhängigen Sollwert oder Sollwertebereich, insbesondere für diesen Strom und/oder diese Spannung,
insbesondere wobei eine ständig wiederholte Kontrolle auf Unterschreiten eines kritischen Wertes ausgeführt wird.

11. Verfahren nach einem der Ansprüche 3 bis 10,
**dadurch gekennzeichnet, dass**
die Zeitverzögerung abhängig ist von der Impedanz des an den Anschlüssen P und M angeschlossenen Verbrauchers, insbesondere von einer Kapazität und/oder Induktivität des Verbrauchers.

12. Verfahren nach einem der Ansprüche 3 bis 11,
**dadurch gekennzeichnet, dass**
statt eines zeitverzögerten Messwertes die Messwerte wiederholend erfasst werden und der Zeitverlauf der Messwerte bei der Fehlererkennung berücksichtigt wird.

## Claims

1. Arrangement for providing a control and/or supply voltage for a consumer,
wherein the consumer is connectable to connections P and M, and a control voltage and/or supply voltage is thus providable to the consumer by the arrangement,
wherein the arrangement comprises a first controllable output switch (2) arranged between a higher potential of a supply voltage, in particular a 24 volt voltage, and the connection P,
wherein a first means for current detection is arranged between the first controllable output switch (2) and the connection P,
wherein the arrangement comprises a second controllable output switch (3) arranged between a lower potential of the supply voltage, in particular earth, and the connection M,
wherein a second means for current detection is arranged between the second controllable output switch (3) and the connection M or between output switch (3) and lower potential of the supply voltage,
wherein
the first means for current detection is arranged in a P-branch, in particular therefore in a branch supplying the connection P,
and wherein the second means for current detection is arranged in an M-branch, therefore in a lower branch, in particular therefore the branch supplying the connection M,
wherein the arrangement has control electronics, to which are supplied the detected values, in particular of current and/or voltage, and which generate the drive signals for the output switches,
wherein the control electronics comprise logic for fault detection,
**characterised in that**
between the first means for current detection and the connection P a diode is arranged, wherein at both connections of the first diode a respective means for voltage detection is arranged,
and/or between the second output switch and the connection M a second diode is arranged, wherein at both connections of the second diode a respective means for voltage detection is arranged,
wherein the states of the drive signals for the output switches and the detected voltage values or current and voltage values are taken into account by the logic for fault detection.

2. Arrangement according to Claim 1,
**characterised in that**
a means for voltage detection comprises a series circuit of ohmic resistors and/or a means for current detection comprises a shunt resistor.

3. Method for operating an arrangement for providing a control and/or supply voltage for a consumer,
wherein the consumer is connectable to connections P and M of the arrangement, and a control voltage and/or supply voltage is thus provided to the consumer by the arrangement,
wherein the arrangement comprises a first controllable output switch (2) arranged between a higher potential of a supply voltage, in particular a 24 volt voltage, and the connection P,
wherein the current between the first controllable output switch (2) and the connection P is detected as first current measured value,
wherein the arrangement comprises a second controllable output switch (3) arranged between a lower potential of the supply voltage, in particular earth, and the connection M,
wherein the current between the second controllable output switch (3) and the connection P is detected as second current measured value,
wherein the arrangement has control electronics, to which are supplied the detected values, in particular of current and/or voltage, and which generate the drive signals for the output switches,
wherein the control electronics comprise logic for fault detection,
**characterised in that**
between the first means for current detection and the connection P a diode is arranged, wherein at both connections of the first diode the voltage is respectively detected, i.e. inwardly directed and on the output side,
and/or between the second output switch and the connection M a second diode is arranged, wherein at both connections of the second diode the voltage is respectively detected, i.e. inwardly directed and on the output side,
wherein the states of the drive signals for the output switches and the detected voltage values or current and voltage values are taken into account by the logic for fault detection.

4. Method according to Claim 3,
**characterised in that**
when the first output switch is open and the second output switch is closed, a separate excitation is made detectable at the second current measured value, in particular by comparing the measured value with critical values corresponding to the separate excitation.

5. Method according to Claim 3 or 4,
**characterised in that**
when the second output switch is open and the first output switch is closed, a separate excitation is made detectable at the first current measured value, in particular by comparing the measured value with critical values corresponding to the separate excitation.

6. Method according to one of Claims 3 to 5,
**characterised in that**
the voltage measured value detected at the first diode on the output side and the inwardly directed voltage measured value are compared with one another, in particular to make an offset voltage detectable.

7. Method according to one of Claims 3 to 6,
**characterised in that**
the voltage measured value detected at the second diode on the output side and the inwardly directed voltage measured value are compared with one another, in particular to make an offset voltage detectable.

8. Method according to one of Claims 3 to 7,
**characterised in that**
depending on the state of the first output switch, the inwardly directed voltage value detected at the first diode is compared with a desired value associated with the state, in particular to monitor the function of the first output switch.

9. Method according to one of Claims 3 to 8,
**characterised in that**
depending on the state of the second output switch, the inwardly directed voltage value detected at the second diode is compared with a desired value associated with the state, in particular to monitor the function of the second output switch.

10. Method according to one of Claims 3 to 9,
**characterised in that**
after changing the switching state of an output switch, the corresponding current measured value and/or voltage measured value is detected with a time delay for comparison with the desired value or desired value range depending on the state, in particular for this current and/or this voltage,
in particular wherein a continually repeated check for falling below a critical value is carried out.

11. Method according to one of Claims 3 to 10,
**characterised in that**
the time delay is dependent on the impedance of the consumer connected to the connections P and M, in particular on a capacitance and/or inductance of the consumer.

12. Method according to one of Claims 3 to 11,
**characterised in that**
instead of a time-delayed measured value, the measured values are detected repetitively and the time profile of the measured values is taken into account in the fault detection.

## Revendications

1. Ensemble destiné à fournir une tension de commande et/ou d'alimentation à un consommateur,
le consommateur pouvant être raccordé à des bornes P et M et une tension de commande et/ou une tension d'alimentation pouvant ainsi être fournie au consommateur par l'ensemble,
l'ensemble comprenant un premier commutateur de sortie commandable (2) qui est disposé entre un potentiel supérieur d'une tension d'alimentation, en particulier de 24 V,
et la borne P,
un premier moyen de détection de courant étant disposé entre le premier commutateur de sortie commandable (2) et la borne P,
l'ensemble comprenant un second commutateur de sortie commandable (3) qui est disposé entre un potentiel inférieur de la tension d'alimentation, en particulier la masse,
et la borne M,
un second moyen de détection de courant étant disposé entre le second commutateur de sortie commandable (3) et la borne M ou entre le commutateur de sortie (3) et le potentiel inférieur de la tension d'alimentation,
dans lequel
le premier moyen de détection de courant est disposé dans une branche P, en particulier donc dans une branche qui alimente la borne P,
et le second moyen de détection de courant est disposé dans une branche M, donc dans une branche inférieure, en particulier donc dans la branche qui alimente la borne M,
l'ensemble présentant une électronique de commande à laquelle les valeurs détectées, en particulier de courant et/ou de tension, sont amenées et qui génère les signaux de commande pour les commutateurs de sortie,
l'électronique de commande comprenant une logique de détection de défauts, **caractérisé en ce**
**qu'**une diode est disposée entre le premier moyen de détection de courant et la borne P, un moyen de détection de tension étant disposé à chacune des deux bornes de la première diode,
et/ou une seconde diode est disposée entre le second commutateur de sortie et la borne M, un moyen de détection de tension étant disposé à chacune des deux bornes de la seconde diode,
la logique de détection de défauts tenant compte des états des signaux de commande pour les commutateurs de sortie et des valeurs de tension ou des valeurs de courant et de tension détectées.

2. Ensemble selon la revendication 1,
**caractérisé en ce**
**qu'**un moyen de détection de tension comprend un montage en série de résistances ohmiques et/ou un moyen de détection de courant une résistance de shunt.

3. Procédé pour faire fonctionner un ensemble destiné à fournir une tension de commande et/ou d'alimentation à un consommateur,
le consommateur étant raccordé à des bornes P et M de l'ensemble et une tension de commande et/ou une tension d'alimentation étant ainsi fournie au consommateur par l'ensemble,
l'ensemble comprenant un premier commutateur de sortie commandable (2) qui est disposé entre un potentiel supérieur d'une tension d'alimentation, en particulier de 24 V,
et la borne P,
le courant entre le premier commutateur de sortie commandable (2) et la borne P étant détecté en tant que première valeur de mesure de courant,
l'ensemble comprenant un second commutateur de sortie commandable (3) qui est disposé entre un potentiel inférieur de la tension d'alimentation, en particulier la masse, et la borne M,
le courant entre le second commutateur de sortie commandable (3) et la borne P étant détecté en tant que seconde valeur de mesure de courant,
l'ensemble présentant une électronique de commande à laquelle les valeurs détectées, en particulier de courant et/ou de tension, sont amenées et qui génère les signaux de commande pour les commutateurs de sortie,
l'électronique de commande comprenant une logique de détection de défauts, **caractérisé en ce**
**qu'**une diode est disposée entre le premier moyen de détection de courant et la borne P, la tension étant détectée à chacune des deux bornes de la première diode, donc dirigée vers l'intérieur et côté sortie,
et/ou une seconde diode est disposée entre le second commutateur de sortie et la borne M, la tension étant détectée à chacune des deux bornes de la seconde diode, donc dirigée vers l'intérieur et côté sortie,
la logique de détection de défauts tenant compte des états des signaux de commande pour les commutateurs de sortie et des valeurs de tension ou des valeurs de courant et de tension détectées.

4. Procédé selon la revendication 3,
**caractérisé en ce**
**que** lorsque le premier commutateur de sortie est ouvert et le second commutateur de sortie est fermé, un court-circuit externe est rendu détectable à la seconde valeur de mesure de courant, en particulier en comparant la valeur de mesure avec des valeurs critiques correspondant au court-circuit externe.

5. Procédé selon l'une des revendications 3 ou 4,
**caractérisé en ce**
**que** lorsque le second commutateur de sortie est ouvert et le premier commutateur de sortie est fermé, un court-circuit externe est rendu détectable à la première valeur de mesure de courant, en particulier en comparant la valeur de mesure avec des valeurs critiques correspondant au court-circuit externe.

6. Procédé selon l'une des revendications 3 à 5,
**caractérisé en ce**
**que** la valeur de mesure de tension côté sortie et la valeur de mesure de tension dirigée vers l'intérieur détectées à la première diode sont comparées entre elles, en particulier pour rendre détectable une tension de défaut.

7. Procédé selon l'une des revendications 3 à 6,
**caractérisé en ce**
**que** la valeur de mesure de tension côté sortie et la valeur de mesure de tension dirigée vers l'intérieur détectées à la seconde diode sont comparées entre elles, en particulier pour rendre détectable une tension de défaut.

8. Procédé selon l'une des revendications 3 à 7,
**caractérisé en ce**
**qu'**en fonction de l'état du premier commutateur de sortie, la valeur de tension détectée à la première diode, dirigée vers l'intérieur, est comparée à une valeur de consigne associée à l'état, en particulier pour surveiller la fonction du premier commutateur de sortie.

9. Procédé selon l'une des revendications 3 à 8,
**caractérisé en ce**
**qu'**en fonction de l'état du second commutateur de sortie, la valeur de tension détectée à la seconde diode, dirigée vers l'intérieur, est comparée à une valeur de consigne associée à l'état, en particulier pour surveiller la fonction du second commutateur de sortie.

10. Procédé selon l'une des revendications 3 à 9,
**caractérisé en ce**
**qu'**après changement de l'état de commutation d'un commutateur de sortie, la valeur de mesure de courant et/ou la valeur de mesure de tension correspondante est détectée avec retard pour la comparaison avec la valeur de consigne ou la plage de valeurs de consigne dépendante de l'état, en particulier pour ce courant et/ou cette tension,
en particulier un contrôle constamment répété de sous-dépassement d'une valeur critique étant effectué.

11. Procédé selon l'une des revendications 3 à 10,
**caractérisé en ce**
**que** le retard dépend de l'impédance du consommateur raccordé aux bornes P et M, en particulier d'une capacité et/ou d'une inductance du consommateur.

12. Procédé selon l'une des revendications 3 à 11,
**caractérisé en ce**
**qu'**au lieu d'une valeur de mesure retardée, les valeurs de mesure sont détectées de façon répétitive et il est tenu compte de la variation dans le temps des valeurs de mesure pour la détection de défauts.
